# EUROPÄISCHE PATENTSCHRIFT

(11) **EP 1 798 205 B1**
(45) Veröffentlichungstag und Bekanntmachung des Hinweises auf die Patenterteilung: **11.02.2009**
(21) Anmeldenummer: 06025374.7
(22) Anmeldetag: 08.12.2006
(51) Int. Cl.: C02F 3/12

(54) **Kleinkläranlage mit Ablaufheber**
Small scale water purification plant with outflow siphon
Station d'épuration d'eau compacte avec siphon d'évacuation

(30) Priorität: 19.12.2005 DE 202005019918 U
(43) Veröffentlichungstag der Anmeldung: 20.06.2007
(73) Patentinhaber: Steffens, Hinrich, 27374 Visselhövede (DE)
(72) Erfinder: Steffens, Hinrich, 27374 Visselhövede (DE)
(74) Vertreter: Hansen, Jochen

(56) Entgegenhaltungen:
- EP-A1- 1 566 498
- CA-C- 2 041 329

## Beschreibung

Die Erfindung betrifft eine Kleinkläranlage zum Klären von Abwasser mit einem Zulauf für das Abwasser, einem Schlammspeicher zur Vorklärung des Abwassers, einem Belebungsbecken zur sequentiellen Klärung des Abwassers, einem Ablauf für Klarwasser, einem Beschickungsmittel zum bedarfsweisen Beschicken des Belebungsbeckens mit Abwasser aus dem Schlammspeicher, einem Ablaufheber zum bedarfsweisen Abpumpen von im Belebungsbecken gebildeten Klarwasser in den Ablauf, wobei der Ablaufheber eine erste Förderleitung aufweist, die in Fließrichtung einen tiefsten Punkt mit einem U-Bogen bildet und stromabwärtig davon eine Druckluftzufuhr aufweist.

Derartige vollbiologische Kleinkläranlagen arbeiten nach einem diskontinuierlichen Verfahren, dem sog. SBR-Verfahren (sequencing batch reactor). Beispielsweise wird auf die DE 201 05 661 U1, DE 20 2004 019 356 U1 oder DE 20 2005 003 588 U1 verwiesen.

Dokument EP 1 566 498 offenbart eine kleinkläranlage mit einer, nach der Druckluftzufuhr angeordneten, Rücklaufsperre in der Förderleitung.

Insbesondere handelt es sich um eine Kläranlage für häusliche Abwasser, die aus wenigstens zwei Stufen besteht. Das zu klärende Abwasser läuft über einen Zulauf in einen Schlammspeicher, der zur Vorklärung des Abwassers und als Vorpuffer dient. In dem Schlammspeicher werden absetzbare Stoffe zurückgehalten und Primär- und Sekundärschlamm gespeichert. Vom Schlammspeicher wird über ein Beschickungsmittel in periodisch wiederkehrenden Pumpvorgängen Abwasser aus dem Schlammspeicher in das Belebungsbecken überführt.

Bei dieser chargenweisen Bearbeitung wird in einem Zyklus jeweils eine Abwassermenge zwischen einem minimalen Wasserstand und einem maximalen Wasserstand im Belebungsbecken verarbeitet. Bei der Beschickung wird vorgeklärtes Wasser mit dem Beschickungsmittel, beispielsweise Druckluftheber oder Pumpe in das Belebungsbecken überführt, bis der maximale Wasserstand im Belebungsbecken erreicht ist.

Nachfolgend folgt eine Belüftung im Belebungsbecken, zum Beispiel mittels Membranrohrbelüfter, die meist intermittierend Druckluft beaufschlagt werden und am Boden des Belebungsbeckens angeordnet sind.

Nach der Belüftung erfolgt eine Absetzphase, in der der im Belebungsbecken durch die Belüftung verwirbelte Belebtschlamm sich durch Sedimentation absetzen kann. In der Folge bildet sich im oberen Bereich des Belebungsbeckens eine Klarwasserzone und am Boden eine Schlammschicht.

Nachfolgend wird das Klarwasser aus dem oberen Bereich des Belebungsbeckens über den Ablaufheber abgezogen. Durch die Höhenlage des Einlaufs in den Druckluftheber wird der minimale Wasserstand im Belebungsbecken begrenzt.

Wenn das Klarwasser abgeführt ist, wird überschüssiger Belebtschlamm aus dem Belebungsbecken mit einem weiteren Fördermittel, meist ebenfalls Druckluftheber, in den Schlammspeicher zurückgefördert.

Bei derartigen Anlagen werden meist vier Zyklen pro Tag durchgeführt.

Die bei diesen Kleinkläranlagen verwendeten Druckluftheber oder auch Mammutpumpen genannt, haben entscheidende Nutzungsvorteile. Unter anderem sind Druckluftheber im wesentlichen wartungsfrei und benötigen keine elektrischen Kontakte im Bereich der Kläranlage, womit eine etwaige Explosionsgefahr gemindert ist.

Nachteilig ist jedoch, dass während der Belüftungsphase Belebtschlamm in die Förderleitung des Ablaufhebers sinken und am Beginn des Klarabwasserabzugs dieser Belebtschlamm als Schmutzfracht in den Ablauf gelangen kann. Dies bedeutet eine unerwünschte Verunreinigung des nachfolgenden Gewässers.

Aufgabe der Erfindung ist es daher, bei einer bekannten SBR-Kleinkläranlage mit Druckluftheber für den Klarwasserabzug Vorkehrungen vorzusehen, um derartige Gewässerbelastungen zu vermeiden.

Gelöst wird diese Aufgabe mit einer Kleinkläranlage nach Anspruch 1. Dadurch, dass in Fließrichtung vor der Druckluftzufuhr in der ersten Förderleitung eine Rücklaufsperre angeordnet ist, wird ein unerwünschtes Absinken von Belebtschlamm während der Belüftungsphase in die erste Förderleitung weitestgehend vermieden. Denn durch die erfindungsgemäße Rücklaufsperre wird nach dem letzten Klarwasserabzug vom vorhergehenden Zyklus eine Restwassersäule in der ersten Förderleitung gehalten, die das Rückschlagventil verschließt. Somit können aufgrund des Belüftungsvorgangs pulsierende Wasserstandsänderungen nicht in die erste Förderleitung des Ablaufhebers übertragen werden und keine Belebtschlammpartikel mitgerissen werden.

Wenn die Rücklaufsperre am Einlauf der ersten Förderleitung vorgesehen ist, wobei der Einlauf auf Höhe eines minimalen Wasserstandes im Belebungsbecken angeordnet ist, wird im wesentlichen die gesamte erste Förderleitung durch die Rücklaufsperre von dem durch den Belüftungsvorgang pulsierenden, turbulenten Strömungsverhältnissen in dem Belebungsbecken abgeschirmt. Ein Eintrag von Belebtschlammpartikeln in die erste Förderleitung des Ablaufhebers wird somit sicher vermieden.

Dadurch, dass die erste Förderleitung des Ablaufhebers in den Ablauf auf Höhe eines maximalen Notfallwasserstandes mündet, wird die erste Förderleitung des Ablaufhebers unmittelbar zu einem Notablauf. Das heißt, dass bei einem Ausfall des Ablaufhebers, beispielsweise durch Stromausfall, der Wasserstand im Belebungsbecken maximal den Notfallwasserstand erreichen kann. Dann erfolgt ein Ablaufen des überschüssigen Wassers über die erste Förderleitung und den Ablauf in das Gewässer. Durch die erfindungsgemäß in der ersten Förderleitung vorgesehene Rücklaufsperre wird zudem sichergestellt, dass bei hohen Wasserständen im Gewässer kein Umgebungswasser in die Anlage zurückdrückt.

Bevorzugt ist in Strömungsrichtung zwischen Ablaufheber und Ablauf ein Probenahmebehälter angeordnet. Je nach Ausbildung des Probenahmebehälters und der Ablaufführung kann ein erheblich höherer Rückstauwasserstand des Gewässers erreicht werden, bevor ein Rücklauf in die Anlage erfolgt. Selbstverständlich ist bei dieser Ausgestaltung nicht mehr sichergestellt, dass bei einem Gewässerrückstau über dem Notfallwasserstand noch Klarwasser über den Ablaufheber gegen den äußeren Wasserdruck abgefördert werden kann. Ggf. müsste bei einem zu hohen Rückstauwasserstand des äußeren Gewässers auch die Beschickung der Kleinkläranlage reduziert oder eingestellt werden. Gleichwohl erhöht die eingebaute Rücklaufsperre die unmittelbare Gefahr eines Überlaufs der Kleinkläranlage aufgrund eines Gewässerrückstaus.

Dadurch, dass das Beschickungsmittel ein Beschickungsheber mit einer zweiten Förderleitung ist, die in Fließrichtung einen tiefsten Punkt mit einem U-Bogen bildet und stromabwärtig davon eine Druckluftzufuhr aufweist, wobei die Einlauföffnung der zweiten Förderleitung auf Höhe des minimalen Wasserstandes des Schlammspeichers angeordnet ist und dieser Bereich im Schlammspeicher durch eine von oberhalb eines maximalen Wasserstandes bis unterhalb des minimalen Wasserstandes des Schlammspeichers hydraulisch geschlossen ausgebildete Tauchwand vom übrigen Schlammspeicher abgeschirmt ist, kann in einfacher Ausgestaltung erreicht werden, dass eine etwaige Schwimmschlammschicht im Schlammspeicher nicht mittels des Beschickungshebers in das Belebungsbecken gefördert wird.

Bevorzugt besteht die Tauchwand aus einem an einer Wand des Schlammspeichers befestigten Folieabschnitt oder Tauchrohrabschnitt. Dabei ist die Anwendung von Folienabschnitten oder Tauchrohrabschnitten zur Abschirmung eines Teilbereiches eines Klärbeckens grundsätzlich bekannt. Bei der Ausgestaltung in Verbindung mit dem Beschickungsheber für die erfindungsgemäße Kleinkläranlage kann damit vorteilhaft eine Verringerung der Schwimmschlammschicht im Belebungsbecken erreicht werden, so dass die Gefahr einer Schmutzfracht im Klarwasser durch angesogene Schwimmschlammpartikel auch beim minimalen Wasserstand im Belebungsbecken deutlich verringert ist.

Wenn ein am in Strömungsrichtung vor dem Ablauf angeordneter Probenahmebehälter angeschlossener Notablauf für einen Abfluss aus dem Belebungsbecken im Störungsfall vorgesehen ist, kann eine Probenahme des an das Gewässer abzugebenden Klarwassers an einer definierten Stelle erreicht werden. Dies berücksichtigt einerseits behördliche Auflagen und erlaubt durch die Zwischenschaltung des Probenahmebehälters auch einen zusätzlichen Anschluss eines Notablaufs, durch den der Abfluss aus dem Belebungsbecken von einem oberen Klarwasserbereich möglich ist. Es kann dabei auch im Notfall ein im wesentlichen gereinigtes Abwasser abfließen, so dass die Belastung des Umgebungsgewässers möglichst gering ist. Dabei kann der Einlauf des Notablaufs in eine Höhenlage oberhalb des minimalen Wasserstandes liegen, so dass gegenüber einer Notablauffunktion über die erste Förderleitung die ablaufende Wasserqualität noch geringfügig verbessert wird.

Dadurch, dass im Notablauf eine Rücklaufsperre angeordnet ist, wird einerseits ein Eindringen von Belebtschlammpartikeln im Notablauf verhindert und andererseits ein Rücklauf vom Außengewässer in das Belebungsbecken bei einem Rückstau des Gewässers über die Ablaufebene vermieden.

Bevorzugt sind die Rücklaufsperren strömungsrichtungssensitive Absperrklappen, insbesondere mit Gummiklappen ausgerüstet. Aus Gummiklappen gebildete Rücklaufsperren sind im wesentlichen wartungsfrei und resistent gegenüber dem Kläranlagenmilieu. Etwaige Schwebteilchen stören die Funktionsfähigkeit der Rücklaufsperre nicht.

Wenn die Rücklaufsperre in Durchströmungsrichtung einen Schwellwiderstand aufweist, insbesondere durch elastische Verspannung der Absperrklappen, ab dem die Rücklaufklappe öffnet, wird eine gewisse Druckdifferenz als Schwellwiderstand zur Öffnung der Rücklaufsperre in Durchströmungsrichtung erforderlich, so dass auch bei im wesentlichen ausgeglichenen Druckverhältnissen ein Einströmen oder Einsinken von Belebtschlammpartikeln in die erste Förderleitung bzw. in den Notablauf vermieden werden. Für die Notablauffunktion muss diese zusätzliche Druckdifferenz mit einem höheren Notfallwasserstand im Belebungsbecken überwunden werden. Dies ist bei der Planung zu berücksichtigen.

Nachfolgend werden zwei Ausführungsbeispiele der Erfindung anhand der beiliegenden Zeichnung beschrieben.

Darin zeigt:
- Fig. 1: eine Kleinkläranlage bestehend aus einem Zweikammerbetonbehälter in Draufsicht,
- Fig. 2: einen Ablaufheber in Einbausituation in einem Belebungsbecken in Seitenansicht in einem ersten Ausführungsbeispiel,
- Fig. 3: einen Ablaufheber in Einbausituation in einem Belebungsbecken in Seitenansicht in einem zweiten Ausführungsbeispiel und
- Fig. 4: einen Beschickungsheber in Einbausituation in einem Schlammspeicher in Seitenansicht.

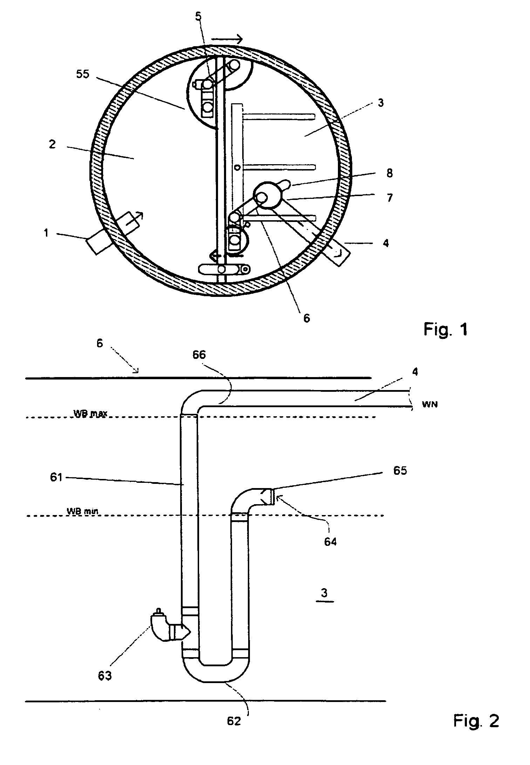

In Fig. 1 ist in Draufsicht ein zylindrischer Betonbehälter 10 ausgebildet mit einer Zwischenwand 11 als Zweikammerbehälter dargestellt. Die Kleinkläranlage weist einen Zulauf 1 für das häusliche Abwasser, einen Schlammspeicher 2 zur Vorklärung des Abwassers, ein Belebungsbecken 3 zur sequentiellen Klärung des Abwassers und einen Ablauf 4 für Klarwasser auf. Ferner ist ein Beschickungsmittel in Form eines Beschickungshebers 5 zum bedarfsweisen Beschicken des Belebungsbeckens 3 mit Abwasser aus dem Schlammspeicher 2 sowie ein Ablaufheber 6 zum bedarfsweisen Abpumpen von im Belebungsbecken 3 gebildeten Klarwasser in den Ablauf 4 vorgesehen.

Wie in Fig. 2 in einer ersten Ausführungsform dargestellt, besteht der Ablaufheber 6 aus einer ersten Förderleitung 61, die beispielsweise aus HI- oder HT-Rohren gebildet ist. Die erste Förderleitung 61 weist an seinem tiefsten Punkt in der in Fig. 2 in Seitenansicht dargestellten Einbausituation im Belebungsbecken 3 einen U-Bogen 62 auf. An der stromabwärtigen Seite des U-Bogens 62 ist ein Luftanschluss 63 zum Anschluss einer nicht dargestellten Druckluftleitung von einem Kompressor angeordnet.

Am stromaufwärtigen Ende der ersten Förderleitung 61 ist eine Einlauföffnung 64 angeordnet. Die Einlauföffnung 64 ist auf Höhe des minimalen Wasserstandes des Belebungsbeckens WBₘᵢₙ angeordnet, der in Fig. 2 gestrichelt dargestellt ist. Im Bereich der Einlauföffnung 64 ist eine Rücklaufsperre oder Rückschlagventil 65 angeordnet.

Das stromabwärtige Ende der ersten Förderleitung 61 führt zum Ablauf 4. Um eine unkontrollierte Selbstentleerung zu vermeiden, ist der Ablauf 4 und somit das stromabwärtige Ende der ersten Förderleitung 61 (Auslauf 66 der ersten Förderleitung 61) oberhalb des maximalen Wasserstandes Belebungsbeckens WBₘₐₓ angeordnet.

Die Funktionsweise des Ausführungsbeispiels gemäß Fig. 2 ist wie folgt:

Die Rücklaufsperre 65 an der Einlauföffnung 64 der ersten Förderleitung 61 verhindert das Einsinken bzw. Eindringen von Belebtschlammpartikeln dadurch, dass sich in der ersten Förderleitung 61 des Ablaufhebers 6 Klarwasser vom letzten Klarwasserabzug befindet, das einen Gegendruck für die Rücklaufsperre bildet und sie somit schließt. Damit können Wasserbewegungen zwischen dem Wasser in der ersten Förderleitung 61 und dem Wasser im Belebungsbecken 3 unterbunden werden. Insgesamt wird somit im wesentlichen vermieden, dass Belebtschlammpartikel in die erste Förderleitung 61 eindringen. Folglich wird beim Aktivieren des Ablaufhebers 6 ein Mitführen von Belebtschlamm und damit eine Gewässerverunreinigung vermieden.

Wenn die Belüftungs- und Absetzphase eines Zykluses der SBR-Kleinkläranlage beendet ist, erfolgt der Klarwasserabzug mittels dem Ablaufheber 6. Durch Druckluftbeaufschlagung an den Luftanschluss 63 wird der Ablaufheber 6 aktiviert. Die in der ersten Förderleitung 61 im vom Luftanschluss 63 aufsteigenden Ast der Rohrleitung aufsteigende Druckluft reisst das sich in der ersten Förderleitung 61 befindliche Klarwasser mit und fördert es zum Auslauf 66, der in den Ablauf 4 übergeht. Klarwasser strömt vom Belebungsbecken in die Einlauföffnung 64 nach. Dabei öffnet sich die Rücklaufsperre 65. Die Höhe des Auslaufs 66 ist so gewählt, dass beim maximalen Wasserstand des Belebungsbeckens WBₘₐₓ eine Selbstentleerung über die erste Förderleitung 61 nicht möglich ist. Sollte aufgrund eines Störfalls jedoch der Wasserspiegel über den Wasserstand WBₘₐₓ steigen, erfüllt die erste Förderleitung 61 gleichzeitig eine Notüberlauffunktion. Sobald der strichpunktierte Wasserstand Notfall WN erreicht ist, fließt überschüssiges Wasser über die erste Förderleitung 61 in den Ablauf 4 ab.

Bei übermäßig hohen Wasserständen im Gewässer und damit einem Rückstau im Ablauf 4 verhindert zudem das Rückschlagventil 65 das Eindringen von Umgebungswasser in die Anlage. Die Rücklaufsperre 65 erfüllt somit eine Doppelfunktion.

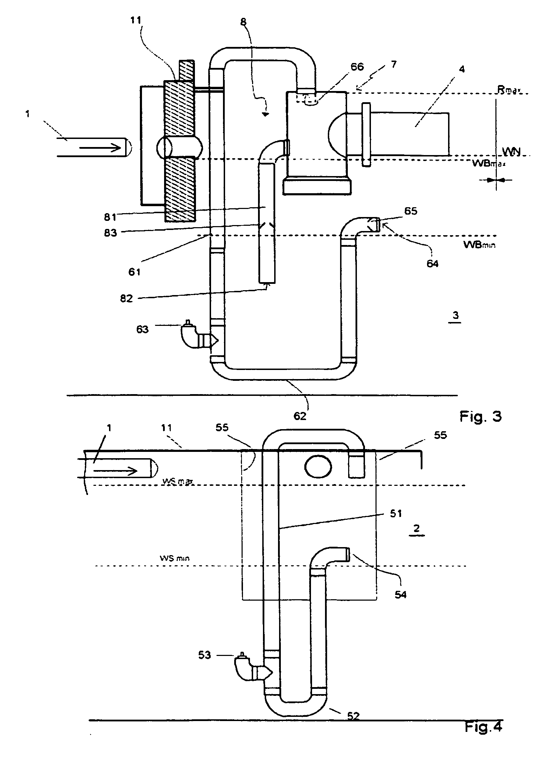

In Fig. 3 ist ein Ablaufheber 6 mit einem nachgeschalteten Probenahmebehälter 7 dargestellt. Funktionsgleiche Bauteile im Vergleich zum vorher beschriebenen Ausführungsbeispiel sind mit gleichen Bezugszeichen bezeichnet.

Der Ablaufheber 6 weist wiederum eine erste Förderleitung 61 auf, die jedoch mit ihrem stromabwärtigen Ende als Auslauf 66 oberhalb des Probenahmebehälters 7 einmündet. Ferner ist am Probenahmebehälter 7 ein Notablauf 8 angeschlossen, der einen in dem Belebungsbecken 3 eintauchenden Rohrabschnitt 81 aufweist. Der Rohrabschnitt 81 weist an seinem unteren Ende eine Einlauföffnung 82 auf, die etwa auf Höhe des minimalen Wasserstandes Belebungsbecken WBₘᵢₙ positioniert ist. Im Rohrabschnitt 81 ist eine Rücklaufsperre 83 in Art eines Rückschlagventils angeordnet. Vom Probenahmebehälter 7 wird das hierhin beförderte Klarwasser über Ablauf 4 dem Gewässer zugeführt.

Beim gewöhnlichen Betrieb der Kläranlage wird entsprechend des Klärzykluses ein Klarwasserabzug über Ablaufheber 6 vom maximalen Wasserstand des Belebungsbecken WBₘₐₓ bis zum minimalen Wasserstand des Belebungsbeckens WBₘᵢₙ durch Druckluftbeaufschlagung des Luftanschlusses 63 des Ablaufhebers 6 bewirkt. Das Klarwasser gelangt dabei über den Probenahmebehälter 7 in den Ablauf 4. Bei Bedarf kann unter dem Auslauf 66 der ersten Förderleitung 61 ein Probenahmebehälter für eine Probenahme gehalten werden.

Der Notablauf 8 dient lediglich bei Ausfall des Ablaufhebers 6 zur Begrenzung eines maximalen Notfallwasserstandes WN. Sobald der Wasserstand WN erreicht ist, fließt das im wesentlichen geklärte Wasser aus dem Umgebungsbereich von Einlauföffnung 82 über Rohrabschnitt 81 durch Rücklaufsperre 83 in den Probenahmebehälter 7 und weiter durch Ablauf 4 in das Gewässer. Zwar wird bei dieser Notablauffunktion der übliche vollständige Klärzyklus nicht eingehalten, gleichwohl ist die zusätzliche Gewässerbelastung erheblich geringer, als wenn die Anlage unkontrolliert überlaufen würde.

Als zusätzliche Sicherheitsfunktion versperrt die Rücklaufsperre 83 im Notablauf 8 einen Rückfluss von Wasser aus dem Ablauf 4 in das Belebungsbecken 3, was bei einem übermäßig hohen Wasserstand des Gewässers im Ablauf 4 denkbar ist. In Fig. 3 ist die durch die Höhenlage der Oberkante des Probenahmebehälters 7 definierte maximale Rückstauhöhe Rₘₐₓ dargestellt. Bei einem oben abgedichteten Probenahmebehälter 7 könnte diese Rückstauhöhe noch auf die U-Bogenhöhe der ersten Förderleitung 61 erhöht werden.

In Fig. 4 ist ein Beschickungsheber 5 in einer Seitenansicht vom Schlammspeicher 2 vor der Trennwand 11 des Behälters 10 dargestellt. Der Beschickungsbeheber 5 besteht aus einer zweiten Förderleitung 51, die in einem tiefsten Punkt mit einem U-Bogen 52 ausgebildet ist und stromabwärtig vom U-Bogen 52 einen Luftanschluss 53 aufweist. An diesem Luftanschluss 53 ist eine nicht dargestellte Druckluftleitung zur Druckluftbeaufschlagung der zweiten Förderleitung 51 vorgesehen.

Am stromaufwärtigen Ende der ersten Förderleitung 51 ist eine Einlauföffnung 54 auf Höhe des minimalen Wasserstandes des Schlammspeichers WSₘᵢₙ angeordnet. Diese Einlauföffnung 54 ist in einem hydraulisch horizontal durch eine Tauchwand 55 abgetrennten Bereich angeordnet. Die Tauchwand 55 kann beispielsweise aus einem Folienabschnitt gebildet sein, der an die Trennwand 11 des Schlammspeichers 2 beidseitig der Einlauföffnung 54 hydraulisch dicht befestigt ist, wie dies in Fig. 1 auch in der Draufsicht dargestellt ist.

Beim bestimmungsgemäßen Betrieb erfolgt ein Wasseraustausch nur über den unten offenen Querschnitt zwischen dem Bereich innerhalb der Tauchwand 55 und dem restlichen Bereich des Schlammspeichers 2. Beim Betätigen des Beschichtungshebers 5 wird somit insbesondere beim Erreichen des minimalen Wasserstandes des Schlammspeichers WSₘᵢₙ verhindert, dass Schwimmschlammschichten, die auf dem Wasserspiegel im Schlammspeicher 2 aufschwimmen, im zu großen Umfang von dem Beschickungsheber 5 in das Belebungsbecken 3 gefördert werden.

In Verbindung mit der erfindungsgemäß vorgesehenen Rücklaufsperre 65 an der Einlauföffnung 64 des Ablaufhebers 6 wird somit die Beaufschlagung des Belebungsbeckens 3 mit Schwimmschlammpartikeln weitestgehend vermieden, so dass diese nicht beim Klarwasserabzug über den Ablaufheber 6 unmittelbar in den Ablauf 4 und damit in das nachfolgende Gewässer gelangen können.

### Bezugszeichenliste

- 1: Zulauf
- 10: Betonbehälter
- 11: Zwischenwand

- 2: Schlammspeicher

- 3: Belebungsbecken

- 4: Ablauf

- 5: Beschickungsmittel
- 51: zweite Förderleitung
- 52: U-Bogen
- 53: Luftanschluss
- 54: Einlauföffnung
- 55: Tauchwand

- 6: Ablaufheber
- 61: erste Förderleitung
- 62: U-Bogen
- 63: Luftanschluss
- 64: Einlauföffnung, Einlauf
- 65: Rücklaufsperre, Rückschlagventil
- 66: Auslauf

- 7: Probenahmebehälter

- 8: Notablauf
- 81: Rohrabschnitt
- 82: Einlauföffnung
- 83: Rücklaufsperre, Rückschlagventil

- WBₘₐₓ: maximaler Wasserstand Belebungsbecken
- WBₘᵢₙ: minimaler Wasserstand Belebungsbecken
- WSₘₐₓ: maximaler Wasserstand Schlammspeicher
- WSₘᵢₙ: minimaler Wasserstand Schlammspeicher
- WN: Wasserstand Notfall
- Rmax: maximale Rückstauhöhe

## Patentansprüche

1. Kleinkläranlage zum Klären von Abwasser mit
- einem Zulauf (1) für das Abwasser,
- einem Schlammspeicher (2) zur Vorklärung des Abwassers,
- einem Belebungsbecken (3) zur sequentiellen Klärung des Abwassers,
- einem Ablauf (4) für Klarwasser,
- einem Beschickungsmittel (5) zum bedarfsweisen Beschicken des Belebungsbeckens (3) mit Abwasser aus dem Schlammspeicher (2),
- einem Ablaufheber (6) zum bedarfsweisen Abpumpen von im Belebungsbecken (3) gebildeten Klarwasser in den Ablauf (4),
wobei der Ablaufheber (6) eine erste Förderleitung (61) aufweist, die in Fließrichtung einen tiefsten Punkt mit einem U-Bogen (62) bildet und stromabwärtig davon eine Druckluftzufuhr (63) aufweist,
**dadurch gekennzeichnet, dass** in Fließrichtung vor der Druckluftzufuhr (63) in der ersten Förderleitung (61) eine Rücklaufsperre (65) angeordnet ist.

2. Kleinkläranlage nach Anspruch 1, **dadurch gekennzeichnet, dass** die Rücklaufsperre (65) am Einlauf (64) der ersten Förderleitung (61) vorgesehen ist, wobei der Einlauf (64) auf Höhe eines minimalen Wasserstandes (WBmin) im Belebungsbecken (3) angeordnet ist.

3. Kleinkläranlage nach Anspruch 1 oder 2, **dadurch gekennzeichnet, dass** die erste Förderleitung (61) des Ablaufhebers (6) in den Ablauf (4) auf Höhe eines maximalen Notfallwasserstandes (WN) mündet.

4. Kleinkläranlage nach Anspruch 1, 2 oder 3, **dadurch gekennzeichnet, dass** in Strömungsrichtung zwischen Ablaufheber (6) und Ablauf (4) ein Probenahmebehälter (7) angeordnet ist.

5. Kleinkläranlage nach einem der vorangehenden Ansprüche, **dadurch gekennzeichnet, dass** das Beschickungsmittel (5) ein Beschickungsheber mit einer zweiten Förderleitung (51) ist, die in Fließrichtung einen tiefsten Punkt mit einem U-Bogen (52) bildet und stromabwärtig davon eine Druckluftzufuhr (53) aufweist, wobei die Einlauföffnung (54) der zweiten Förderleitung (51) auf Höhe des minimalen Wasserstandes (WSmin) des Schlammspeichers (2) angeordnet ist und dieser Bereich im Schlammspeicher (2) durch eine von oberhalb eines maximalen Wasserstandes (WSmax) bis unterhalb des minimalen Wasserstandes (WSmin) des Schlammspeichers (2) hydraulisch geschlossen ausgebildete Tauchwand (55) vom übrigen Schlammspeicher (2) abgeschirmt ist.

6. Kleinkläranlage nach Anspruch 5, **dadurch gekennzeichnet, dass** die Tauchwand (55) aus einem an einer Wand (11) des Schlammspeichers (2) befestigten Folieabschnitt oder Tauchrohrabschnitt besteht.

7. Kleinkläranlage nach einem der vorangehenden Ansprüche, **dadurch gekennzeichnet, dass** ein am in Strömungsrichtung vor dem Ablauf (4) angeordneter Probenahmebehälter (7) angeschlossener Notablauf (8) für einen Abfluss aus dem Belebungsbecken (3) im Störungsfall vorgesehen ist.

8. Kleinkläranlage nach Anspruch 7, **dadurch gekennzeichnet, dass** im Notablauf (8) eine Rücklaufsperre (83) angeordnet ist.

9. Kleinkläranlage nach einem der vorangehenden Ansprüche, **dadurch gekennzeichnet, dass** die Rücklaufsperre (65, 83) eine strömungsrichtungssensitive Absperrklappe, bevorzugt mit Gummiklappen, ist.

10. Kleinkläranlage nach Anspruch 9, **dadurch gekennzeichnet, dass** die Rücklaufsperre (65, 83) in Durchströmungsrichtung einen Schwellwiderstand aufweist, insbesondere durch elastische Verspannung der Absperrklappen, ab dem die Rücklaufklappe öffnet.

## Claims

1. A small-scale clarification plant for the clarification of waste water with
- a supply (1) for the waste water,
- a sludge reservoir (2) for the preliminary clarification of the waste water,
- an aeration basin (3) for the sequential clarification of the waste water,
- an outlet (4) for clear water,
- a charging means (5) for charging the aeration basin (3) with waste water from the sludge reservoir (2) when required,
- an outlet siphon (6) for pumping out clear water formed in the aeration basin (3) into the outlet (4) when required,
wherein the outlet siphon (6) has a first conveying line (61) which forms a lowest point with a U-shaped bend (62) in the flow direction and has a compressed-air supply (63) downstream of the latter,
**characterized in that** a return-flow barrier (65) is arranged in the first conveying line (61) upstream of the compressed-air supply (63) in the flow direction.

2. A small-scale clarification plant according to Claim 1, **characterized in that** the return-flow barrier (65) is provided at the inlet (64) of the first conveying line (61), wherein the inlet (64) is arranged at the height of a minimum water level **(WBₘᵢₙ)** in the aeration basin (3).

3. A small-scale clarification plant according to Claim 1 or 2, **characterized in that** the first conveying line (61) of the outlet siphon (6) opens into the outlet (4) at the height of a maximum emergency water level **(WN).**

4. A small-scale clarification plant according to Claim 1, 2 or 3, **characterized in that** a sampling tank (7) is arranged between the outlet siphon (6) and the outlet (4) in the flow direction.

5. A small-scale clarification plant according to any one of the preceding Claims, **characterized in that** the charging means (5) is a charging siphon with a second conveying line (51) which forms a lowest point with a U-shaped bend (52) in the flow direction and has a compressed-air supply (53) downstream of the latter, wherein the inlet opening (54) of the second conveying line (51) is arranged at the height of the minimum water level **(WSₘᵢₙ)** of the sludge reservoir (2), and this region in the sludge reservoir (2) is screened off from the rest of the sludge reservoir (2) by a scum baffle (55) formed in an hydraulically closed manner from above a maximum water level **(WSₘₐₓ)** to below the minimum water level **(WSₘᵢₙ)** of the sludge reservoir (2).

6. A small-scale clarification plant according to Claim 5, **characterized in that** the scum baffle (55) consists of a foil portion or immersion-pipe portion fastened to a wall (11) of the sludge reservoir (2).

7. A small-scale clarification plant according to any one of the preceding Claims, **characterized in that** an emergency outlet (8) attached to the sampling tank (7) arranged upstream of the outlet (4) in the flow direction is provided for an outflow out of the aeration basin (3) in the event of a breakdown.

8. A small-scale clarification plant according to Claim 7, **characterized in that** a return-flow barrier (83) is arranged in the emergency outlet (8).

9. A small-scale clarification plant according to any one of the preceding Claims, **characterized in that** the return-flow barrier (65, 83) is a shut-off flap, preferably with rubber flaps, which is sensitive to the flow direction.

10. A small-scale clarification plant according to Claim 9, **characterized in that** the return-flow barrier (65, 83) has a threshold resistance in the through-flow direction, in particular as a result of resilient tensioning of the shut-off flaps, beyond which threshold resistance the return-flow valve opens.

## Revendications

1. Petite station d'épuration pour la purification des eaux usées avec
- une entrée (1) pour les eaux usées,
- un réservoir de boue (2) pour la préclarification des eaux usées,
- un bassin activation (3) pour la clarification séquentielle des eaux usées,
- une évacuation (4) pour l'eau claire,
- des moyens d'alimentations (5) pour alimenter suivant les besoins le bassin d'activation (3) avec des eaux usées provenant du réservoir de boue (2),
- une pompe d'évacuation (6) pour pomper suivant les besoins l'eau claire formée dans le bassin d'activation (3) dans l'évacuation (4),
la pompe d'évacuation (6) présentant une première conduite de transport (61) qui forme dans la direction de l'écoulement un point le plus bas avec un coude en U (62) et présentant, placée en aval de celui-ci, une alimentation en air comprimé (63),
**caractérisée en ce qu'**un dispositif anti-retour (65) est disposé dans la première conduite de transport (61) avant, en direction de l'écoulement, l'alimentation en air comprimé.

2. Petite station d'épuration selon la revendication 1, **caractérisée en ce que** le dispositif anti-retour (65) est prévu à l'entrée (64) de la première conduite de transport (61), l'entrée (64) étant disposée à la hauteur d'un niveau d'eau minimum (WBmin) dans le bassin d'activation (3).

3. Petite station d'épuration selon la revendication 1 ou 2, **caractérisée en ce que** la première conduite de transport (61) de la pompe d'évacuation (6) débouche dans l'évacuation (4) à la hauteur d'un niveau d'eau de secours maximum (WN).

4. Petite station d'épuration selon la revendication 1, 2 ou 3, **caractérisée en ce qu'**un récipient pour prélever des échantillons (7) est placé, dans la direction d'écoulement, entre la pompe d'évacuation (6) et l'évacuation (4).

5. Petite station d'épuration selon l'une des revendications précédentes, **caractérisée en ce que** les moyens d'alimentation (5) sont une pompe d'alimentation (51) avec une deuxième conduite de transport (51) qui forme dans la direction de l'écoulement un point le plus bas avec un coude en U (52) et présente, placée en aval de celui-ci, une alimentation en air comprimé (53), l'ouverture d'entrée (54) de la deuxième conduite de transport (51) étant disposée à la hauteur du niveau d'eau minimum (WSmin) du réservoir de boue (2) et cette zone dans le réservoir de boue (2) étant séparée du reste du réservoir de boue (2) par une paroi plongeuse (55) conçue fermée hydroliquement depuis au-dessus d'un niveau d'eau maximum (WSmax) jusqu'en dessous d'un niveau d'eau minimum (WSmin) du réservoir de boue (2).

6. Petite station d'épuration selon la revendication 5, **caractérisée en ce que** la paroi plongeuse (55) est constituée d'un segment de tube plongeur ou d'un segment de feuille fixé sur la paroi (11) du réservoir de boue (2).

7. Petite station d'épuration selon l'une des revendications précédentes, **caractérisée en ce qu'**il est prévu une évacuation de secours (8) raccordée au récipient pour prélever des échantillons (7) situé, dans le sens de l'écoulement, avant l'évacuation (4) pour permettre une décharge en provenance du bassin d'activation (3) en cas de dysfonctionnement.

8. Petite station d'épuration selon la revendication 7, **caractérisée en ce qu'**un dispositif anti-retour (83) est disposé dans l'évacuation de secours (8).

9. Petite station d'épuration selon l'une des revendications précédentes, **caractérisée en ce que** le dispositif anti-retour (65, 83) est un clapet d'arrêt sensible à la direction d'écoulement, de préférence un clapet en caoutchouc.

10. Petite station d'épuration selon la revendication 9, **caractérisée en ce que** le dispositif anti-retour (65, 83) présente en direction de l'écoulement une résistance seuil, notamment grâce à la déformation élastique du clapet d'arrêt, à partir de laquelle le clapet anti-retour s'ouvre.
